# EUROPÄISCHE PATENTSCHRIFT

(11) **EP 3 539 931 B1**
(45) Veröffentlichungstag und Bekanntmachung des Hinweises auf die Patenterteilung: **26.08.2020**
(21) Anmeldenummer: 18161880.2
(22) Anmeldetag: 15.03.2018
(51) Int. Cl.: C02F 1/34, C02F 1/48, C02F 5/02, C02F 1/20

(54) **WASSERBEHANDLUNGSEINHEIT**
WATER TREATMENT UNIT
UNITÉ DE TRAITEMENT DES EAUX

(43) Veröffentlichungstag der Anmeldung: 18.09.2019
(73) Patentinhaber: CWW Vermögensverwaltungs GmbH, 95126 Schwarzenbach/Saale (DE)
(72) Erfinder:
(74) Vertreter: Wolf, Gerhard

(56) Entgegenhaltungen:
- EP-A2- 0 525 835
- WO-A1-88/09773
- GB-A- 1 038 330
- US-A- 4 485 012
- US-A- 4 818 395

## Beschreibung

Die Erfindung betrifft eine Wasserbehandlungseinheit sowie ein Verfahren zur Behandlung von Wasser mit einer solchen Wasserbehandlungseinheit.

Wasserbehandlungseinheiten zur chemiefreien Wasserbehandlung sind grundsätzlich bekannt. In derartigen Einheiten werden aus im Wasser vorhandenen Inhaltsstoffen Partikel (insbesondere Mikropartikel) aus Calciumcarbonat gebildet. Dadurch kann die Verkalkung bzw. Bildung von Kesselstein an Einrichtungen in einem Wasserkreislauf, insbesondere einem Warmwasserkreislauf wirksam verringert werden.

Aus der europäischen Patentanmeldung EP 0 525 835 A2 ist eine Vorrichtung zur Beseitigung von Kesselstein bekannt geworden, bei der die Wasserbehandlung durch ein von einer Spule erzeugtes Magnetfeld bewirkt wird. Dabei sind innerhalb eines Gehäuses eine oder mehrere Umlenkplatten vorgesehen, mittels denen eine mehrfache Umlenkung des Wassers beim Durchfließen des Gehäuses erzwungen wird.

Die Druckschrift US 4 818 395 A offenbart eine Vorrichtung zur Verringerung von Kesselstein in einem wasserführenden Leitungssystem.

Die Druckschrift GB 1 038 330 A offenbart eine Vorrichtung zur Verhinderung der Bildung von Kesselstein. In einen von Wasser durchflossenen Innenraum eines Gehäuses reicht ein Metallstab hinein, der durch eine Spule in Schwingungen versetzbar ist.

Die Druckschrift US 4 485 012 A offenbart ein Wasserbehandlungssystem basierend auf einem Wechselmagnetfeld.

Die Druckschrift WO 88/09773 A1 offenbart zuletzt eine Vorrichtung zur Behandlung einer Flüssigkeit.

Ausgehend hiervon ist es Aufgabe der Erfindung, eine Wasserbehandlungseinheit anzugeben, die eine effektive Wasserbehandlung ermöglicht.

Die Aufgabe wird durch eine Wasserbehandlungseinheit gemäß den Merkmalen des unabhängigen Patentanspruchs 1 gelöst. Bevorzugte Ausführungsformen sind Gegenstand der Unteransprüche. Ein Verfahren zur Behandlung von Wasser ist Gegenstand des nebengeordneten Patentanspruchs 15. 14.

Gemäß einem ersten Aspekt bezieht sich die Erfindung auf eine Wasserbehandlungseinheit. Die Wasserbehandlungseinheit umfasst ein Gehäuse mit einem Gehäuseinnenraum und einer im Gehäuseinnenraum schwingend gelagerten Schwingungseinheit. Die Schwingungseinheit ist durch eine von einem elektrischen Wechselsignal durchflossene Spule in Schwingung versetzbar. An dem Gehäuse sind ein Wasserzulauf und ein Wasserablauf vorgesehen. Zwischen der den Gehäuseinnenraum begrenzenden Innenwandung des Gehäuses und der Schwingungseinheit ist ein Durchflussbereich gebildet, der derart ausgebildet ist, dass vom Wasserzulauf zum Wasserablauf fließendes Wasser die Schwingungseinheit umfließt.

Die erfindungsgemäße Wasserbehandlungseinheit bietet den entscheidenden Vorteil, dass die Wirkung des Magnetfeldes auf das Wasser durch das mechanische Einwirken der Schwingungseinheit auf das Wasser entscheidend verbessert wird.

Gemäß einem Ausführungsbeispiel weist der Durchflussbereich einen in Fließrichtung an den Wasserzulauf anschließenden ersten Durchflussbereichsabschnitt und einen in Fließrichtung vor dem Wasserablauf angeordneten zweiten Durchflussbereichsabschnitt auf. Dabei ist der Durchflussquerschnitt des zweiten Durchflussbereichsabschnitts zumindest abschnittsweise größer als der Durchflussquerschnitt des ersten Durchflussbereichsabschnitts. Die Unterschiede des Durchflussquerschnitts zwischen dem ersten und zweiten Durchflussbereichsabschnitt können durch eine entsprechende Formung der Schwingungseinheit und/oder durch eine Formung der Innenwand des Gehäuses bewirkt werden. Die Verringerung des Durchflussquerschnitts nach dem Wasserzulauf hat den Vorteil, dass die Fließgeschwindigkeit des Wassers erhöht und dadurch ein Sog bzw. Turbulenzen im Wasser erzeugt werden. Dadurch kommt es vorteilhafterweise zu einer Ausgasung von CO2 und damit zur Verschiebung des Kalk-Kohlensäure-Gleichgewichts. Diese Verschiebung hat vorteilhafte Auswirkungen auf die Erzeugung von Calciumcarbonat-Mikrokristallen.

Gemäß einem Ausführungsbeispiel weist die Schwingungseinheit in Bezug auf eine Schwingungseinheitsmittelebene zu gegenüberliegenden Seiten hin abstehende Vorsprünge auf, wobei die durch einen ersten, dem Wasserzulauf zugewandten Vorsprung hervorgerufene Durchflussquerschnittsverjüngung des Durchflussbereichs größer ist als die durch den zweiten, dem Wasserablauf zugewandten Vorsprung hervorgerufene Durchflussquerschnittsverjüngung. Damit wird durch eine entsprechende Formung der Schwingungseinheit das gewünschte Design des Durchflussquerschnitts im Durchflussbereich des Wassers erreicht. Dies kann, falls nötig, auch durch eine entsprechende Formung der Innenwandung des Gehäuses unterstützt werden.

Gemäß einem Ausführungsbeispiel ist der erste und zweite Vorsprung höckerartig oder hügelartig mit einer abgerundeten Spitze ausgebildet. Dadurch wird eine vorteilhafte Ablenkung des Wassers durch die Schwingungseinheit und damit ein gezieltes Umfließen der Schwingungseinheit erreicht.

Gemäß einem Ausführungsbeispiel ist die von der Schwingungseinheitsmittelebene ab gemessene Höhe des ersten Vorsprungs größer ist als die von der Schwingungseinheitsmittelebene ab gemessene Höhe des zweiten Vorsprungs. In anderen Worten ist die Schwingungseinheit bezogen auf die Schwingungseinheitsmittelebene nicht symmetrisch ausgebildet, da der erste Vorsprung stärker vorsteht als der zweite Vorsprung. Dadurch kann die zuvor beschriebene stärkere Durchflussquerschnittsverjüngung unmittelbar nach dem Wasserzulauf erreicht werden.

Gemäß einem Ausführungsbeispiel weist das Material der Schwingungseinheit eine geringere Dichte auf als das Material des Gehäuses. Vorzugsweise ist das Gehäuse aus Eisenguss (insbesondere GG25) gebildet und die Schwingungseinheit weist eine im Vergleich zu Eisenguss geringere Dichte auf. Dadurch kann erreicht werden, dass die technischen Anforderungen an die Lagerung der Schwingungseinheit geringer sein können und die Lagerung einem geringeren Verschleiß unterliegt. Es versteht sich jedoch, dass die Schwingungseinheit ferromagnetische Eigenschaften aufweisen muss, um durch die Spule in mechanische Schwingung versetzt zu werden.

Gemäß einem Ausführungsbeispiel ist die Schwingungseinheit aus einem ferromagnetischen Kunststoff gebildet. Dadurch kann eine Schwingungseinheit mit relativ geringer Masse erzielt werden.

Gemäß einem Ausführungsbeispiel ist die Schwingungseinheit zum Vollziehen einer Schwingbewegung in einer Richtung senkrecht zur Schwingungseinheitsmittelebene schwingend gelagert. Dadurch lässt sich die Schwingungseinheit auf den Wasserzulauf bzw. den Wasserablauf zu- bzw. von diesen wegbewegen.

Gemäß einem Ausführungsbeispiel erfolgt die schwingende Lagerung der Schwingungseinheit durch ein Federelement und/oder einen Elastomer. Vorteilhafterweise wird durch die Lagerung ein magnetischer Kurzschluss zwischen dem Gehäuse und der Schwingungseinheit wirksam verhindert, wobei hier die Verwendung von Edelstahlfedern oder einem ElastomerMaterial als Lagerelemente bevorzugt ist.

Gemäß einem Ausführungsbeispiel ist die Schwingungseinheit durch asymmetrische Lagerelemente schwingend gelagert. Dadurch kann die Lagerung das Schwingungsverhalten der Schwingungseinheit gezielt beeinflussen. Beispielsweise können die Lagerelemente derart gewählt sein, dass die Schwingungseinheit in Richtung des Wasserzulaufs einen geringeren Schwingungshub vollziehen kann als in Richtung des Wasserablaufs. Dadurch kann ein Anschlagen der Schwingungseinheit am Gehäuse aufgrund des zulaufseitig geringeren Durchflussquerschnitts wirksam vermieden werden.

Gemäß einem Ausführungsbeispiel ist ein Sensor zur Schwingungsüberwachung der Schwingungseinheit vorgesehen. Der Sensor kann insbesondere ein Schwingungssensor sein, mittels dem mechanische Schwingungen detektierbar sind. Dadurch kann eine Funktionsüberwachung der Wasserbehandlungseinheit vollzogen werden.

Gemäß einem Ausführungsbeispiel ist der Sensor am Gehäuse vorgesehen und zur berührungslosen Schwingungsüberwachung der Schwingungseinheit ausgebildet. "Berührungslose Schwingungsüberwachung" bedeutet dabei insbesondere, dass der Sensor beabstandet zur Schwingungseinheit angeordnet ist und die Schwingungen der Schwingungseinheit lediglich indirekt über Schwingungen am Gehäuse erfassbar sind. Dadurch kann eine technisch einfache Schwingungsüberwachung erreicht werden.

Gemäß einem Ausführungsbeispiel ist der Sensor mit einer Auswerteeinheit gekoppelt, die zur Auswertung des Schwingverhaltens und/oder der Schwingfrequenz der Schwingungseinheit ausgebildet ist.

Durch die Auswerteeinheit kann das vom Sensor bereitgestellte Messsignal ausgewertet werden, um zu bestimmen, ob Schwingungseinheit mechanische Schwingungen im Sollfrequenzbereich bzw. gemäß einem vordefinierten Sollschwingverhalten vollzieht oder nicht. Dadurch lassen sich Rückschlüsse auf die korrekte Funktion der Wasserbehandlungseinheit ziehen.

Gemäß einem Ausführungsbeispiel ist die Auswerteeinheit dazu ausgebildet, festzustellen, ob die Schwingfrequenz der Schwingungseinheit innerhalb oder außerhalb eines Sollbereichs der Schwingfrequenz liegt, ob die Schwingungseinheit keine Schwingung vollzieht und/oder ob das Schwingverhalten der Schwingungseinheit einem Soll-Schwingverhalten entspricht. Dadurch können basierend auf den von der Auswerteeinheit bereitgestellten Informationen Hinweise auf mögliche Fehlerursachen abgeleitet werden.

Gemäß einem weiteren Aspekt betrifft die Erfindung ein Verfahren zur Behandlung von Wasser mittels einer Wasserbehandlungseinheit. Die Wasserbehandlungseinheit weist ein Gehäuse mit einer im Gehäuseinnenraum schwingend gelagerten Schwingungseinheit und eine Spule auf. Das Verfahren umfasst die folgenden Schritte :
- Beaufschlagen der Spule mit einem elektrischen Wechselsignal, wodurch die Schwingungseinheit in eine mechanische Schwingbewegung versetzt wird;
- Durchleiten von Wasser durch den Gehäuseinnenraum der Wasserbehandlungseinheit derart, dass das Wasser die Schwingungseinheit umfließt; und
- Ausfällen von Calciumcarbonat aus dem Wasser durch Einwirken der Schwingungseinheit auf das Wasser.

Unter "Umfließen der Schwingungseinheit" im Sinne der vorliegenden Erfindung wird verstanden, dass das Wasser nicht durch die Schwingungseinheit hindurchfließen kann, sondern durch die Oberfläche der Schwingungseinheit abgelenkt und damit die Schwingungseinheit außenseitig in einem Durchflussbereich zwischen Gehäuse und Schwingungseinheit passiert.

Unter "Calciumcarbonat-Mikrokristallen" bzw. "Calciumcarbonat-Partikel" werden im Sinne der vorliegenden Erfindung jegliche Partikel verstanden, die aus Calciumcarbonat bestehen oder zumindest einen Anteil von Calciumcarbonat enthalten.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: beispielhaft eine schematische Darstellung eines Systems mit einer Wasserbehandlungseinheit in einem ersten Ausführungsbeispiel;
- Fig. 2: beispielhaft eine schematische Darstellung eines Systems mit einer Wasserbehandlungseinheit in einem zweiten Ausführungsbeispiel;
- Fig. 3: beispielhaft ein Ausführungsbeispiel einer Wasserbehandlungseinheit in einer Schnittdarstellung; und
- Fig. 4: beispielhaft eine Ausschnittsdarstellung der Lagerung der Schwingungseinheit in dem in Figur 3 hervorgehobenen Bereich.

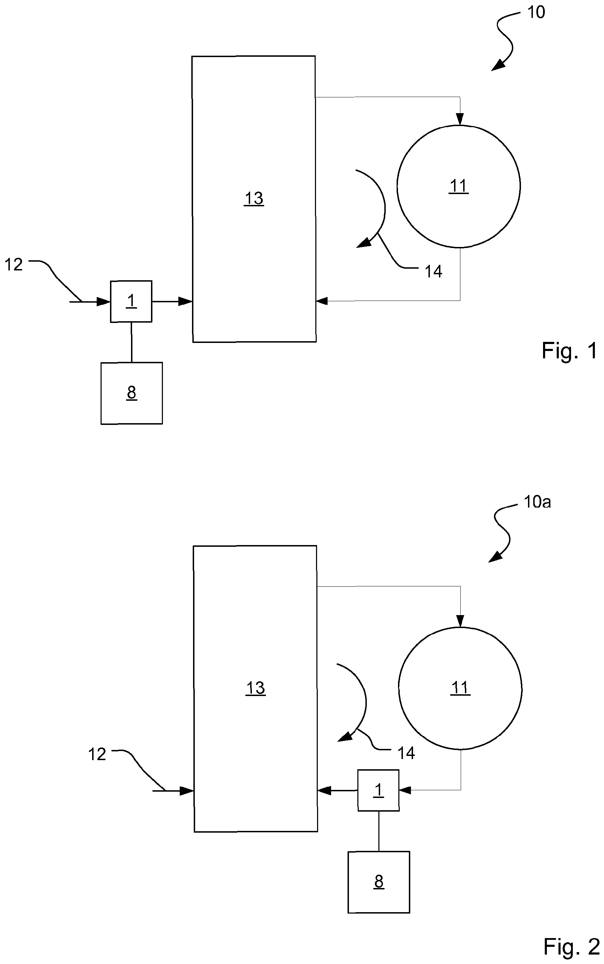

In den Figuren 1 und 2 sind grob schematisch zwei Einbausituationen einer Wasserbehandlungseinheit 1 in ein System 10 zur Bereitstellung von Warmwasser für einen Verbraucher 11 gezeigt. Es versteht sich, dass die Wasserbehandlungseinrichtung 1 nicht auf die Verwendung in einem derartigen System beschränkt ist, sondern auch zur Wasserbehandlung in anders gearteten Systemen einsetzbar ist.

In Figur 1 wird Wasser, insbesondere kaltes Wasser, einer Wasserbehandlungseinheit 1 über einen Zulauf 12 zugeführt. Nach dem Durchlaufen der Wasserbehandlungseinheit 1 und der darin erfolgten Ausfällung von Calciumcarbonat (Entcarbonisierung) wird das Wasser einem Warmwasserbereiter 13 zugeführt. In diesem Warmwasserbereiter 13 wird das Wasser erwärmt. Das erwärmte Wasser kann anschließend bedarfsgerecht einem Verbraucher 11 zugeleitet werden. Der Verbraucher kann beispielsweise in einer Warmwasserzirkulation 14 vorgesehen sein, d.h. selbst dann, wenn von dem Verbraucher 11 kein Warmwasser verbraucht wird, zirkuliert das Warmwasser, wie dies durch den Pfeil mit dem Bezugszeichen 14 angedeutet ist.

Fig. 2 zeigt ein System 10a ähnlich dem vorbeschriebenen System 10. Der wesentliche Unterschied besteht darin, dass die Wasserbehandlungseinheit 1 nicht im Bereich des Zulaufs 12 vorgesehen ist, sondern in die Warmwasserzirkulation 14 integriert ist. Im gezeigten Ausführungsbeispiel ist die Wasserbehandlungseinheit 1 im Warmwasser-Rücklauf zwischen dem Verbraucher 11 und dem Warmwasserbereiter 13 vorgesehen. Alternativ wäre es auch möglich, die Wasserbehandlungseinheit 1 im Warmwasser-Vorlauf zwischen dem Warmwasserbereiter 13 und dem Verbraucher 11 vorzusehen.

Das System 10, 10a weist zudem eine Auswerteeinheit 8 auf, mittels der die Funktion der Wasserbehandlungseinheit 1 überprüfbar ist. Die Funktion der Auswerteeinheit 8 wird nachstehend näher erläutert.

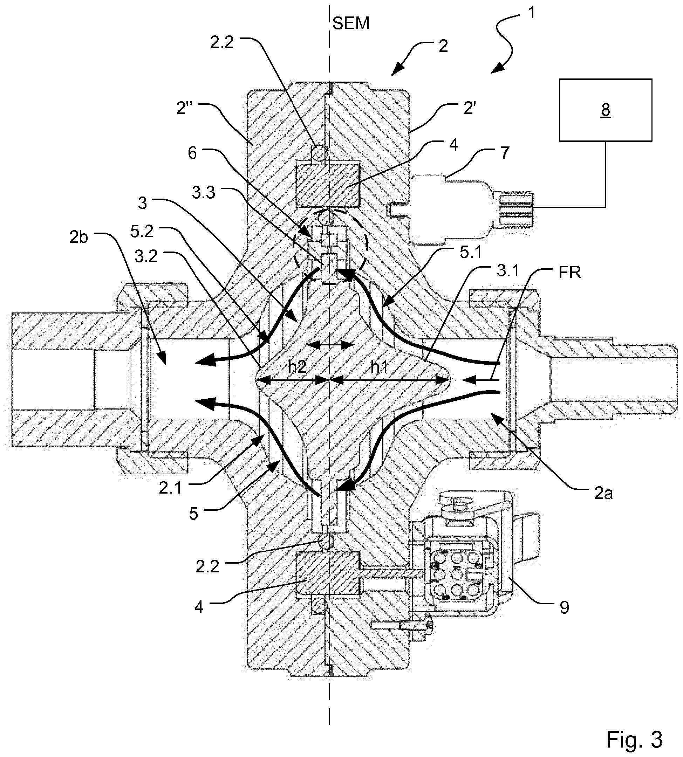

Fig. 3 zeigt eine Schnittdarstellung durch die Wasserbehandlungseinheit 1. Die Wasserbehandlungseinheit 1 umfasst ein Gehäuse 2. Das Gehäuse 2 besteht im gezeigten Ausführungsbeispiel aus zwei Gehäuseteilen 2', 2", die miteinander durch Dichtungen 2.2 fluiddicht verbunden sind, um einen Gehäuseinnenraum 2.1 fluiddicht nach außen hin zu begrenzen. Der Gehäuseteil 2' weist einen Verbindungsbereich auf, der einen Wasserzulauf 2a bildet. Analog dazu weist der Gehäuseteil 2" ebenso einen Verbindungsbereich auf, der einen Wasserablauf 2b bildet. Der Wasserzulauf 2a und der Wasserablauf 2b sind an gegenüberliegenden Seiten des Gehäuses 2 vorgesehen.

Die Gehäuseteile 2', 2" sind beispielsweise teller- oder schalenartig ausgebildet. Der Gehäuseinnenraum 2.1 weitet sich vom Wasserzulauf 2a zur Gehäusemitte hin auf und verjüngt sich dann in Richtung des Wasserablaufs 2b zunehmend. In anderen Worten vergrößert sich der Durchmesser bzw. die lichte Weite des Gehäuseinnenraums vom Wasserzulauf 2a zur Gehäusemitte hin und verringert sich dann wieder von der Gehäusemitte in Richtung des Wasserablaufs 2b.

Im Gehäuseinnenraum 2.1 ist eine Schwingungseinheit 3 vorgesehen. Diese Schwingungseinheit 3 ist über eine Lagerung 6 schwingend zwischen den Gehäuseteilen 2', 2" gelagert. Die schwingende Lagerung erfolgt insbesondere derart, dass die Schwingungseinheit 3 sich senkrecht zu einer Schwingungseinheitsmittelebene SEM bewegen kann, wie dies durch den Doppelpfeil in Fig. 3 skizziert ist. In anderen Worten ist die Schwingungseinheit 3 derart bewegbar im Gehäuse 2 aufgenommen, dass sie ihre räumliche Lage zwischen Wasserzulauf 2a und Wasserablauf 2b zumindest geringfügig ändern kann.

Die Schwingungseinheit 3 wirkt mit einer Spule 4 zusammen, die abgesetzt vom Gehäuseinnenraum 2.1 zwischen den beiden Gehäuseteilen 2', 2" gekapselt ist. Die Spule 4 wird durch mehrere Windungen eines stromdurchflossenen elektrischen Leiters gebildet. Wird die Spule mit einem elektrischen Wechselsignal beaufschlagt, wird ein Wechselmagnetfeld erzeugt, das die Schwingungseinheit 3 in mechanische Schwingungen versetzt. Durch diese Schwingungen bewegt sich die Schwingungseinheit 3 in der Darstellung gemäß Fig. 3 in horizontaler Richtung, d.h. abwechselnd auf den Wasserzulauf 2a zu und von diesem weg. Die Schwingfrequenz der Schwingungseinheit 3 kann beispielsweise im Bereich zwischen 0,02 Hz und 0,5 Hz, insbesondere im Bereich zwischen 0,03 Hz und 0,25 Hz, besonders bevorzugt zwischen 0,038 Hz und 0,125 Hz liegen. Die Zuleitung des Wechselsignals zu der Spule 4 erfolgt vorzugsweise über eine am Gehäuse 2 vorgesehene Steckverbindung 9.

Zur Reduzierung der Masse der Schwingungseinheit 3 ist diese vorzugsweise aus einem Material gefertigt, das sich von dem Material des Gehäuses 2 unterscheidet. Insbesondere weist das Material der Schwingungseinheit 3 eine geringere Dichte auf als das Material des Gehäuses 2. Das Gehäuse ist beispielsweise aus Guss gefertigt, beispielsweise GG25. Derartiges Material weist gute ferromagnetische Eigenschaften auf und ermöglicht vorzugsweise eine Bündelung des von der Spule 4 erzeugten Magnetfeldes im Bereich des Gehäuseinnenraums 2.1, insbesondere im Zentrum des Gehäuseinnenraums 2.1, was Vorteile bei der Ausfällung von Calciumcarbonat bietet.

Die Schwingungseinheit 3 ist vorzugsweise aus einem ferromagnetischen Kunststoff gebildet. Dadurch kann die Masse der Schwingungseinheit 3 erheblich reduziert werden, wodurch die mechanische Belastung der Lagerung 6 reduziert und damit die Lebensdauer der Lagerelemente 6.1, 6.2, die die Lagerung 6 bewirken, erhöht wird. Die Lagerung 6 kann durch jegliche Lagerelemente 6.1, 6.2 erfolgen, die eine schwingende Lagerung der Schwingungseinheit 3 ermöglichen. Jedoch muss ein magnetischer Kurzschluss zwischen dem Gehäuse 2 und der Schwingungseinheit 3 wirksam vermieden werden. Die Lagerung 6 kann bevorzugt Elastomere oder Federelemente aus Edelstahl aufweisen.

Wie in der Schnittdarstellung in Fig. 3 ersichtlich, weist die Schwingungseinheit 3 zwei zu unterschiedlichen Seiten hin abstehende Vorsprünge 3.1, 3.2 auf, und zwar einen ersten Vorsprung 3.1, der von der Schwingungseinheitsmittelebene SME in Richtung des Wasserzulaufs 2a absteht und einen zweiten Vorsprung 3.2, der in Richtung des Wasserablaufs 2b absteht. In der Schwingungseinheitsmittelebene SME kann die Schwingungseinheit 3 rotationssymmetrisch oder im Wesentlichen rotationssymmetrisch ausgebildet sein.

Die Vorsprünge 3.1, 3.2 sind hügel- oder höckerartig ausgebildet. Vorzugsweise sind die Vorsprünge 3.1, 3.2 in Bezug auf die Querschnittsfläche der Schwingungseinheit 3 zentriert oder im Wesentlichen zentriert angeordnet. In anderen Worten verläuft damit eine die Maxima der Vorsprünge 3.1, 3.2 verbindende Verbindungslinie senkrecht oder im Wesentlichen senkrecht zur Schwingungseinheitsmittelebene SME.

Vorzugsweise weisen die Vorsprünge 3.1, 3.2 in Bezug auf die Schwingungseinheitsmittelebene SME unterschiedliche Höhen auf. Wie in Fig. 3 gezeigt, weist der erste Vorsprung 3.1 eine Höhe h1 und der zweite Vorsprung 3.2 eine Höhe h2 auf, wobei h1 > h2 gilt. Die jeweilige Höhe h1, h2 wird dabei jeweils zwischen der Schwingungseinheitsmittelebene SME und dem Punkt des Vorsprungs 3.1, 3.2 gemessen, der sich am weitesten von dieser Schwingungseinheitsmittelebene SME entfernt befindet (d.h. das lokale Maximum des Vorsprungs).

Das Größenverhältnis zwischen den Höhen h1 und h2 kann derart gewählt sein, dass die Höhe h1 zumindest 30 %, vorzugsweise mehr als 50 %, besonders bevorzugt mehr als 100 % größer ist als die Höhe h2.

In Fig. 3 ist das Umfließen der Schwingungseinheit 3 durch das Wasser, das in Fließrichtung FR vom Wasserzulauf 2a in Richtung des Wasserablaufs 2b fließt, mittels der geschwungenen Pfeile dargestellt. Zwischen der Innenwandung des Gehäuses 2 und der Schwingungseinheit 3 wird ein Durchflussbereich 5 gebildet. Dieser Durchflussbereich 5 weist zwei Abschnitte auf, und zwar einen ersten Durchflussbereichsabschnitt 5.1, der sich von dem Wasserzulauf 2a zur Schwingungseinheitsmittelebene SME hin erstreckt, und einen zweiten Durchflussbereichsabschnitt 5.2, der sich von der Schwingungseinheitsmittelebene SME zum Wasserablauf 2b hin erstreckt.

Durch die vorbeschriebene Ausbildung der Schwingungseinheit 3 mit den unterschiedlich geformten Vorsprüngen 3.1, 3.2 weisen die Durchflussbereichsabschnitte 5.1, 5.2 unterschiedliche Durchflussquerschnitte auf. Insbesondere ist der Durchflussquerschnitt zumindest abschnittsweise im Durchflussbereichsabschnitt 5.1 kleiner als im Durchflussbereichsabschnitt 5.2.

Diese Unterschiede im Durchflussquerschnitt können auch durch unterschiedlich geformte Gehäuseteile 2', 2" gebildet werden, d.h. alternativ oder zusätzlich zu der vorbeschriebenen Formung der Schwingungseinheit 3 kann eine geeignete Formung der Innenwände der Gehäuseteile 2', 2" die vorbeschriebene Verringerung des Durchflussquerschnitts im Durchflussbereichsabschnitt 5.1 bewirken.

Durch den geringeren Durchflussquerschnitt im Durchflussbereichsabschnitt 5.1 im Vergleich zum Durchflussbereichsabschnitt 5.2 wird erreicht, dass die Fließgeschwindigkeit des Wassers vom Wasserzulauf 2a zur Schwingungseinheitsmittelebene SME hin zunimmt und anschließend auf dem Weg von der Schwingungseinheitsmittelebene SME zum Wasserablauf 2b hin wieder reduziert wird. Damit kommt es im Bereich des Wasserzulaufs 2a zu einem Sog bzw. zu Turbulenzen, welcher/welche eine lokale Verwirbelung des Wassers bewirken. Dadurch kommt es vorteilhafterweise zur Ausgasung von Kohlendioxid (CO2). Diese Ausgasung von Kohlendioxid verschiebt vorteilhafter Weise die Lage des Kalk-Kohlensäure-Gleichgewichts und fördert damit die Ausscheidung von Calciumcarbonat-Mikrokristallen.

Durch die Querschnittsaufweitung im Bereich des Wasserauslaufs 2b wird zudem eine Strömungsberuhigung des Wassers erreicht, so dass das Wasser die Wasserbehandlungseinheit 1 in einer laminaren Strömung verlässt.

Zur Funktionsüberwachung der Wasserbehandlungseinheit 1 kann ein Sensor 7 vorgesehen sein. Vorzugsweise ist dieser Sensor 7 an dem Gehäuse 2 angeordnet, und zwar insbesondere derart, dass der Sensor 7 bzw. dessen die Messinformationen ermittelnder Messabschnitt nicht in den Gehäuseinnenraum 2.1 hineinragt und damit nicht mit dem die Wasserbehandlungseinheit 1 durchfließenden Wasser in Berührung kommt. Der Sensor 7 kann insbesondere ein Vibrationssensor sein, d.h. ein Sensor, dessen Messsignal Informationen dahingehend enthält, ob und in welchem Maße an der Wasserbehandlungseinheit 1 Vibrationen auftreten oder nicht. Der Sensor 7 kann beispielsweise ein piezoelektrischer Beschleunigungssensor sein. Es versteht sich, dass auch andere Sensortypen zum Einsatz kommen können.

Der Sensor 7 ist vorzugsweise mit einer Auswerteeinheit 8 verbunden, in der eine Signalauswertung des vom Sensor 7 bereitgestellten Signals erfolgt. Insbesondere wird eine Signalauswertung dahingehend vorgenommen, wie hoch die vom Sensor 7 ermittelte Schwingfrequenz ist. Aus der Schwingfrequenz lassen sich nämlich vorteilhafterweise Informationen hinsichtlich des Zustands der Wasserbehandlungseinheit 1 ableiten.

Vorzugsweise kann die Auswerteeinheit 8 dazu ausgebildet sein, zu ermitteln, ob die Schwingfrequenz in einem bestimmten Schwingfrequenz-Sollbereich liegt. Dieser Schwingfrequenz-Sollbereich kann insbesondere durch einen unteren Schwingfrequenzgrenzwert und einen oberen Schwingfrequenzgrenzwert definiert sein. Liegt die vom Sensor 7 ermittelte Schwingfrequenz in diesem Schwingfrequenz-Sollbereich, ist davon auszugehen, dass die Wasserbehandlungseinheit 1 im Normalbetrieb arbeitet.

Lässt sich jedoch keine oder nur eine sehr geringe Schwingfrequenz feststellen, ist davon auszugehen, dass die Schwingungseinheit 3 zumindest teilweise blockiert ist, beispielsweise durch eingespülte Partikel oder durch Korrosionseffekte. Zudem kann ein Abweichen der Schwingfrequenz von dem Schwingfrequenz-Sollbereich (insbesondere ein Nachschwingen der Schwingungseinheit 3) darauf hindeuten, dass die Lagerung 6 der Schwingungseinheit 3 verschlissen ist. Damit können ausgehend von den Informationen, die durch die Auswerteeinheit 8 bereitgestellt werden, gezielte Wartungsarbeiten an der Wasserbehandlungseinheit 1 eingeleitet werden.

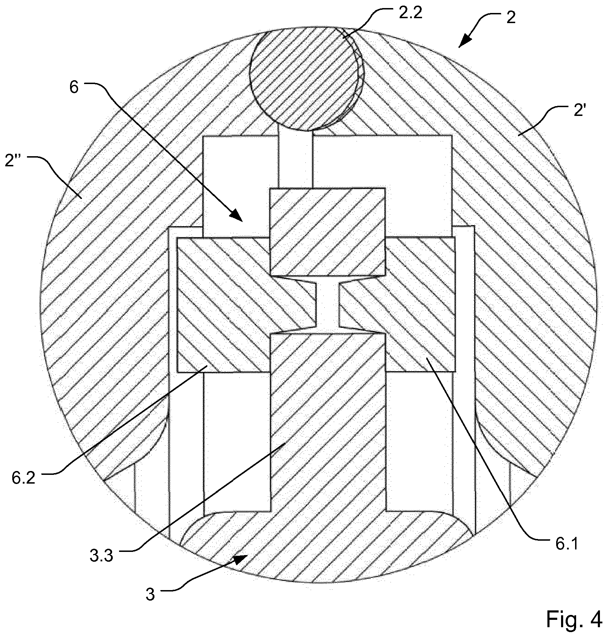

Fig. 4 zeigt eine Detaildarstellung der Lagerung 6 der Wasserbehandlungseinheit 1, und zwar dem Bereich, der in Fig. 3 durch den gestrichelt eingezeichneten Kreis hervorgehoben ist. Die Lagerung 6 erfolgt vorzugsweise punktweise an definierten, umfangsseitig verteilten Stellen der Schwingungseinheit 3.

Die Lagerung 6 wird im gezeigten Ausführungsbeispiel durch einen von der Schwingungseinheit 3 radial abstehenden Lagerabschnitt 3.3 und einem Paar von zusammenwirkenden Lagerelementen 6.1, 6.2 gebildet. Die Lageelemente 6.1, 6.2 können beispielsweise durch einen Elastomer oder durch Federelemente gebildet werden. Im gezeigten Ausführungsbeispiel weisen die Lageelemente 6.1, 6.2 einander zugewandte Vorsprünge auf, die in eine Ausnehmung des Lagerabschnitts 3.3 der Schwingungseinheit 3 eingreifen.

Die Lageelemente 6.1, 6.2 können, wie im Ausführungsbeispiel gemäß Figur 4 gezeigt, asymmetrisch ausgebildet sein, d.h. sich beispielsweise in deren Größe bzw. Elastizität unterscheiden, so dass hierdurch ein gewünschtes Schwingverhalten der Schwingungseinheit 3 erzielbar ist.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrunde liegend Erfindungsgedanke verlassen wird.

### Bezugszeichenliste

- 1: Wasserbehandlungseinheit
- 2: Gehäuse
- 2': erstes Gehäuseteil
- 2": zweites Gehäuseteil
- 2a: Wasserzulauf
- 2b: Wasserablauf
- 2.1: Gehäuseinnenraum
- 2.2: Dichtung
- 3: Schwingungseinheit
- 3.1: erster Vorsprung
- 3.2: zweiter Vorsprung
- 3.3: Lagerabschnitt
- 4: Spule
- 5: Durchflussbereich
- 5.1: erster Durchflussbereichsabschnitt
- 5.2: zweiter Durchflussbereichsabschnitt
- 6: Lagerung
- 6.1: erstes Lagerelement
- 6.2: zweites Lagerelement
- 7: Sensor
- 8: Auswerteeinheit
- 9: Steckverbindung
- 10, 10a: System
- 11: Verbraucher
- 12: Zulauf
- 13: Warmwasserbereiter
- 14: Warmwasserzirkulation
- FR: Fließrichtung
- h1: erste Höhe
- h2: zweite Höhe
- SEM: Schwingungseinheitsmittelebene

## Patentansprüche

1. Wasserbehandlungseinheit mit einem einen Gehäuseinnenraum (2.1) aufweisenden Gehäuse (2) und einer im Gehäuseinnenraum (2.1) schwingend gelagerten Schwingungseinheit (3), wobei die Schwingungseinheit (3) zum Vollziehen einer Schwingbewegung in einer Richtung senkrecht zu einer Schwingungseinheitsmittelebene (SEM) schwingend gelagert ist, wobei die Schwingungseinheit (3) durch eine von einem elektrischen Wechselsignal durchflossenen Spule (4) in Schwingung versetzbar ist, wobei an dem Gehäuse (2) ein Wasserzulauf (2a) und ein Wasserablauf (2b) vorgesehen ist, und wobei zwischen der den Gehäuseinnenraum (2.1) begrenzenden Innenwandung des Gehäuses (2) und der Schwingungseinheit (3) ein Durchflussbereich (5) gebildet ist, der derart ausgebildet ist, dass vom Wasserzulauf (2a) zum Wasserablauf (2b) fließendes Wasser die Schwingungseinheit (3) umfließt und wobei die Schwingungseinheit (3) zwei zu unterschiedlichen Seiten hin abstehende Vorsprünge (3.1, 3.2) aufweist, und zwar einen ersten Vorsprung (3.1), der von der Schwingungseinheitsmittelebene (SME) in Richtung des Wasserzulaufs (2a) absteht und einen zweiten Vorsprung (3.2), der in Richtung des Wasserablaufs (2b) absteht.

2. Wasserbehandlungseinheit nach Anspruch 1, **dadurch gekennzeichnet, dass** der Durchflussbereich (5) einen in Fließrichtung (FR) an den Wasserzulauf (2a) anschließenden ersten Durchflussbereichsabschnitt (5.1) und einen in Fließrichtung (FR) vor dem Wasserablauf (2b) angeordneten zweiten Durchflussbereichsabschnitt (5.2) aufweist und dass der Durchflussquerschnitt des zweiten Durchflussbereichsabschnitts (5.2) zumindest abschnittsweise größer ist als der Durchflussquerschnitt des ersten Durchflussbereichsabschnitts (5.1).

3. Wasserbehandlungseinheit nach Anspruch 1 oder 2, **dadurch gekennzeichnet, dass** die durch einen ersten, dem Wasserzulauf (2a) zugewandten Vorsprung (3.1) hervorgerufene Durchflussquerschnittsverjüngung des Durchflussbereichs (5) größer ist als die durch den zweiten, dem Wasserablauf (2b) zugewandten Vorsprung (3.2) hervorgerufene Durchflussquerschnittsverjüngung.

4. Wasserbehandlungseinheit nach Anspruch 3, **dadurch gekennzeichnet, dass** der erste und zweite Vorsprung (3.1, 3.2) höckerartig mit einer abgerundeten Spitze ausgebildet ist.

5. Wasserbehandlungseinheit nach Anspruch 3 oder 4, **dadurch gekennzeichnet, dass** die von der Schwingungseinheitsmittelebene (SEM) ab gemessene Höhe (h1) des ersten Vorsprungs (3.1) größer ist als die von der Schwingungseinheitsmittelebene (SEM) ab gemessene Höhe (h2) des zweiten Vorsprungs (3.2).

6. Wasserbehandlungseinheit nach einem der vorhergehenden Ansprüche, **dadurch gekennzeichnet, dass** das Material der Schwingungseinheit (3) eine geringere Dichte aufweist als das Material des Gehäuses (2).

7. Wasserbehandlungseinheit nach einem der vorhergehenden Ansprüche, **dadurch gekennzeichnet, dass** die Schwingungseinheit (3) aus einem ferromagnetischen Kunststoff gebildet ist.

8. Wasserbehandlungseinheit nach einem der vorhergehenden Ansprüche, **dadurch gekennzeichnet, dass** die schwingende Lagerung (6) der Schwingungseinheit (3) durch ein Federelement und/oder einen Elastomer erfolgt.

9. Wasserbehandlungseinheit nach einem der vorhergehenden Ansprüche, **dadurch gekennzeichnet, dass** die Schwingungseinheit (3) durch asymmetrische Lagerelemente (6.1, 6.2) schwingend gelagert ist.

10. Wasserbehandlungseinheit nach einem der vorhergehenden Ansprüche, **dadurch gekennzeichnet, dass** ein Sensor (7) zur Schwingungsüberwachung der Schwingungseinheit (3) vorgesehen ist.

11. Wasserbehandlungseinheit nach Anspruch 10, **dadurch gekennzeichnet, dass** der Sensor (7) am Gehäuse (2) vorgesehen ist und zur berührungslosen Schwingungsüberwachung der Schwingungseinheit (3) ausgebildet ist.

12. Wasserbehandlungseinheit nach Anspruch 10 oder 11, **dadurch gekennzeichnet, dass** der Sensor (3) mit einer Auswerteeinheit (8) gekoppelt ist, die zur Auswertung des Schwingverhaltens und/oder der Schwingfrequenz der Schwingungseinheit (3) ausgebildet ist.

13. Wasserbehandlungseinheit nach Anspruch 12, **dadurch gekennzeichnet, dass** die Auswerteeinheit (8) dazu ausgebildet ist festzustellen, ob die Schwingfrequenz der Schwingungseinheit (3) innerhalb oder außerhalb eines Sollbereichs der Schwingfrequenz liegt, ob die Schwingungseinheit (3) keine Schwingung vollzieht und/oder ob das Schwingverhalten der Schwingungseinheit (3) einem Soll-Schwingverhalten entspricht.

14. Verfahren zur Behandlung von Wasser mittels einer Wasserbehandlungseinheit (1), wobei die Wasserbehandlungseinheit (1) ein Gehäuse (2) mit einer im Gehäuseinnenraum (2.1) schwingend gelagerten Schwingungseinheit (3), wobei die Schwingungseinheit (3) zwei zu unterschiedlichen Seiten hin abstehende Vorsprünge (3.1, 3.2) aufweist, und zwar einen ersten Vorsprung (3.1), der von einer Schwingungseinheitsmittelebene (SME) in Richtung des Wasserzulaufs (2a) absteht und einen zweiten Vorsprung (3.2), der in Richtung des Wasserablaufs (2b) absteht und wobei die Wasserbehandlungseinheit (1) eine Spule (4) aufweist, wobei das Verfahren die folgenden Schritte aufweist:
- Beaufschlagen der Spule (4) mit einem elektrischen Wechselsignal, wodurch die Schwingungseinheit (3) in eine mechanische Schwingbewegung versetzt wird, so dass die Schwingungseinheit (3) eine Schwingbewegung in einer Richtung senkrecht zur Schwingungseinheitsmittelebene (SEM) vollzieht;
- Durchleiten von Wasser durch den Gehäuseinnenraum (2.1) der Wasserbehandlungseinheit (1) derart, dass das Wasser die Schwingungseinheit (3) umfließt; und
- Ausfällen von Calciumcarbonat aus dem Wasser durch Einwirken der Schwingungseinheit (3) auf das Wasser.

## Claims

1. A water treatment unit with a housing (2) having a housing interior (2.1) and an oscillation unit (3) mounted oscillatingly in said housing interior (2.1), wherein said oscillation unit (3) is mounted oscillatingly so as to perform an oscillating movement in a direction perpendicular to a oscillation unit center plane (SEM), wherein said oscillation unit (3) is oscillated by a coil (4) carrying an electrical alternating signal, wherein a water inlet (2a) and a water outlet (2b) are provided on said housing (2), and wherein a flow area (5) is formed between the inner wall of said housing (2) bordering said housing interior (2.1) and said oscillation unit (3), said flow area (5) being formed such that water flowing from said water inlet (2a) to said water outlet (2b) flows around said oscillation unit (3), and wherein said oscillation unit (3) has two projections (3.1, 3.2) protruding towards different sides, namely a first projection (3.1) protruding from said oscillation unit center plane (SEM) towards said water inlet (2a) and a second projection (3.2) protruding towards said water outlet (2b).

2. The water treatment unit according to claim 1, **characterized in that** said flow area (5) has a first flow area portion (5.1) adjoining said water inlet (2a) in the flow direction (FR) and a second flow area portion (5.2) arranged upstream of said water outlet (2b) in said flow direction (FR), and **in that** the flow cross section of said second flow area portion (5.2) is, at least in segments, larger than the flow cross section of said first flow area portion (5.1).

3. The water treatment unit according to claim 1 or 2, **characterized in that** the tapering of said flow cross-section of said flow area (5) caused by a first projection (3.1) facing said water inlet (2a) is greater than the tapering of said flow cross-section caused by said second projection (3.2) facing said water outlet (2b).

4. The water treatment unit according to claim 3, **characterized in that** said first and second projections (3.1, 3.2) have a hump-like shape with a rounded tip.

5. The water treatment unit according to claim 3 or 4, **characterized in that** the height (h1) of said first projection (3.1) measured from said oscillation unit center plane (SEM) is greater than the height (h2) of said second projection (3.2) measured from said oscillation unit center plane (SEM).

6. The water treatment unit according to one of the preceding claims, **characterized in that** the material of said oscillation unit (3) has a lower density than the material of said housing (2).

7. The water treatment unit according to one of the preceding claims, **characterized in that** said oscillation unit (3) is made of a ferromagnetic plastic material.

8. The water treatment unit according to one of the preceding claims, **characterized in that** said oscillating mounting (6) of said oscillation unit (3) comprises at least one of a spring element and/or an elastomer.

9. The water treatment unit according to one of the preceding claims, **characterized in that** said oscillation unit (3) is mounted oscillatingly by asymmetrical mounting elements (6.1, 6.2).

10. The water treatment unit according to one of the preceding claims, **characterized in that** a sensor (7) for monitoring oscillation of said oscillation unit (3) is provided.

11. The water treatment unit according to claim 10, **characterized in that** said sensor (7) is provided on said housing (2) and is configured for non-contact oscillation monitoring of said oscillation unit (3).

12. The water treatment unit according to claim 10 or 11, **characterized in that** said sensor (3) is coupled to an evaluation unit (8) configured to evaluate at least one of the oscillation behavior and/or the oscillation frequency of said oscillation unit (3).

13. The water treatment unit according to claim 12, **characterized in that** said evaluation unit (8) is configured to determine whether the oscillation frequency of said oscillation unit (3) is within or outside a desired range of the oscillation frequency, whether said oscillation unit (3) performs no oscillation and/or whether the oscillation behavior of said oscillation unit (3) corresponds to a desired oscillation behavior.

14. A method for treating water by means of a water treatment unit (1), wherein said water treatment unit (1) comprises a housing (2) with an oscillation unit (3) oscillatingly mounted in a housing interior (2.1), wherein said oscillation unit (3) has two projections (3.1, 3.2) protruding towards different sides, namely a first projection (3.1) protruding from an oscillation unit center plane (SEM) towards a water inlet (2a) and a second projection (3.2) protruding towards a water outlet (2b), and wherein said water treatment unit (1) comprises a coil (4), said method comprising the steps of:
- applying an alternating electrical signal to said coil (4), causing said oscillation unit (3) to oscillate mechanically such that said oscillation unit (3) performs an oscillating movement in a direction perpendicular to said oscillation unit center plane (SEM);
- passing water through said housing interior (2.1) of said water treatment unit (1) such that the water flows around said oscillation unit (3); and
- precipitating calcium carbonate from the water by the effect of said oscillation unit (3) on the water.

## Revendications

1. Unité de traitement d'eau comportant un boîtier (2) présentant un volume intérieur de boîtier (2.1) et une unité de vibration (3) montée de manière à vibrer dans le volume intérieur de boîtier (2.1), l'unité de vibration (3) étant montée de manière à vibrer dans une direction perpendiculaire à un plan central (SEM) de l'unité de vibration afin d'effectuer un mouvement de vibration, l'unité de vibration (3) pouvant être mise en vibration par une bobine (4) traversée par un signal électrique alternatif, une entrée d'eau (2a) et une sortie d'eau (2b) étant prévues sur le boîtier (2), et une zone d'écoulement (5) étant formée entre la paroi intérieure du boîtier (2), délimitant le volume intérieur de boîtier (2.1), et l'unité de vibration (3), zone qui est réalisé de telle sorte que l'eau s'écoulant de l'entrée d'eau (2a) vers la sortie d'eau (2b) circule autour de l'unité de vibration (3), et l'unité de vibration (3) comprenant deux saillies (3.1, 3.2) dépassant vers des côtés différents, à savoir une première saillie (3.1) qui dépasse du plan central (SME) de l'unité de vibration en direction de l'entrée d'eau (2a), et une seconde saillie (3.2) qui dépasse en direction de la sortie d'eau (2b).

2. Unité de traitement d'eau selon la revendication 1, **caractérisée en ce que** la zone d'écoulement (5) comprend une première portion de zone d'écoulement (5.1) adjacente à l'entrée d'eau (2a) en direction d'écoulement (FR) et une seconde portion de zone d'écoulement (5.2) disposée en amont de la sortie d'eau (2b) en direction d'écoulement (FR), et **en ce que** la section transversale d'écoulement de la seconde portion de zone d'écoulement (5.2) est au moins localement plus grande que la section transversale d'écoulement de la première portion de zone d'écoulement (5.1).

3. Unité de traitement d'eau selon la revendication 1 ou 2, **caractérisée en ce que** le rétrécissement de la section transversale d'écoulement de la zone d'écoulement (5) causé par une première saillie (3.1) tournée vers l'entrée d'eau (2a) est plus grand que le rétrécissement de la section transversale d'écoulement causé par la seconde saillie (3.2) tournée vers la sortie d'eau (2b).

4. Unité de traitement d'eau selon la revendication 3, **caractérisée en ce que** les première et seconde saillies (3.1, 3.2) sont réalisées en forme de bosse présentant une pointe arrondie.

5. Unité de traitement d'eau selon la revendication 3 ou 4, **caractérisée en ce que** la hauteur (h1) de la première saillie (3.1) mesurée à partir du plan central (SEM) de l'unité de vibration est supérieure à la hauteur (h2) de la seconde saillie (3.2) mesurée à partir du plan central (SEM) de l'unité de vibration.

6. Unité de traitement d'eau selon l'une des revendications précédentes, **caractérisée en ce que** le matériau de l'unité de vibration (3) présente une densité inférieure à celle du matériau du boîtier (2).

7. Unité de traitement d'eau selon l'une des revendications précédentes, **caractérisée en ce que** l'unité de vibration (3) est formée en matière plastique ferromagnétique.

8. Unité de traitement d'eau selon l'une des revendications précédentes, **caractérisée en ce que** le montage vibrant (6) de l'unité de vibration (3) est réalisé par un élément ressort et/ou par un élastomère.

9. Unité de traitement d'eau selon l'une des revendications précédentes, **caractérisée en ce que** l'unité de vibration (3) est montée de manière à vibrer par des éléments de montage asymétriques (6.1, 6.2).

10. Unité de traitement d'eau selon l'une des revendications précédentes, **caractérisée en ce qu'**il est prévu un capteur (7) pour surveiller la vibration de l'unité de vibration (3).

11. Unité de traitement d'eau selon la revendication 10, **caractérisée en ce que** le capteur (7) est prévu sur le boîtier (2) et est réalisé pour la surveillance sans contact des vibrations de l'unité de vibration (3).

12. Unité de traitement d'eau selon la revendication 10 ou 11, **caractérisée en ce que** le capteur (3) est couplé à une unité d'évaluation (8) qui est réalisée pour évaluer le comportement de vibration et/ou la fréquence de vibration de l'unité de vibration (3).

13. Unité de traitement d'eau selon la revendication 12, **caractérisée en ce que** l'unité d'évaluation (8) est réalisée pour déterminer si la fréquence de vibration de l'unité de vibration (3) se situe à l'intérieur ou à l'extérieur d'une plage de consigne de la fréquence de vibration, si l'unité de vibration (3) n'effectue pas de vibration et/ou si le comportement de vibration de l'unité de vibration (3) correspond à un comportement de vibration de consigne.

14. Procédé de traitement d'eau au moyen d'une unité de traitement d'eau (1), l'unité de traitement d'eau (1) comportant un boîtier (2) présentant une unité de vibration (3) montée de manière à vibrer dans le volume intérieur de boîtier (2.1), l'unité de vibration (3) comprenant deux saillies (3.1, 3.2) dépassant vers des côtés différents, à savoir une première saillie (3.1) qui dépasse d'un plan central (SME) de l'unité de vibration en direction de l'entrée d'eau (2a), et une seconde saillie (3.2) qui dépasse en direction de la sortie d'eau (2b), l'unité de traitement d'eau (1) comprenant une bobine (4),
le procédé comprenant les étapes suivantes :
- appliquer un signal électrique alternatif à la bobine (4), moyennant quoi l'unité de vibration (3) est mise en un mouvement vibrant mécanique, de sorte que l'unité de vibration (3) effectue un mouvement de vibration dans une direction perpendiculaire au plan central (SEM) de l'unité de vibration ;
- faire passer l'eau à travers le volume intérieur de boîtier (2.1) de l'unité de traitement d'eau (1) de telle sorte que l'eau circule autour de l'unité de vibration (3) ; et
- faire précipiter du carbonate de calcium à partir de l'eau par l'action de l'unité de vibration (3) sur l'eau.
